# EUROPEAN PATENT APPLICATION

(11) **EP 1 356 968 A2**
(43) Date of publication of application: **29.10.2003**
(21) Application number: 03008980.9
(22) Date of filing: 17.04.2003
(51) Int. Cl.: B60J 7/06

(54) **Extendable tunnel-type covering device**

(30) Priority: 24.04.2002 IT UD20020091
(71) Applicant: Cramaro Italia Srl, 37044 Cologna Veneta (Vr) (IT)
(72) Inventor: Benedetti, Roberto, 06044 Castel Ritaldi, Fraz. La Bruna PG (IT); Capponi, Massimo, 36057 Arcugnano (VI) (IT)
(74) Representative: Petraz, Gilberto

(57) **Abstract**

Extendable tunnel-type covering device, comprising a plurality of bow-shaped support elements (13) able to slide between a first position, wherein they define a first open condition of the cover, and a second position wherein they define a second closed condition of the cover, and a canvas (16) able to be associated with the bow-shaped support elements (13). At least part of the bow-shaped support elements (13) is able to alternately assume a first raised position and a second lowered position in order to temporarily vary the height of the space defined by the bow-shaped support elements (13).

## Description

### FIELD OF THE INVENTION

The present invention concerns an extendable tunnel-type covering device, able to be associated, for example, with a means of transport such as a truck and trailer, a truck, a railway car or suchlike, or of the type used for the temporary protection of persons or goods in an open space.

The device according to the present invention comprises at least a canvas associated with a plurality of bow-shaped support elements connected to each other, for example, by pantograph means. The support elements are able to be selectively packed when the cover is open, or separated from each other when it is closed. The support elements, according to the invention, are also able to selectively assume a first lowered position and at least a second raised position, in order to at least temporarily vary the usable height of the cover and to facilitate operations to load or store goods of great size.

### BACKGROUND OF THE INVENTION

A covering device is known for an articulated truck comprising an extendable tunnel-type frame able to slide on a loading plane. The extendable frame comprises a plurality of ribs, or bow-shaped elements, connected together in a pantograph, able to be selectively packed, normally towards the driver's cabin, in a first open condition, and separated from each other along the loading plane in a second condition when the cover is closed.

The ribs support a covering canvas which, when closed, can be clamped and tensioned on both sides to the loading plane or the side members of the truck.

The ribs have a limited height, in conformity with existing legislation on maximum height allowed to trucks.

The known type frame has the disadvantage that, when it is necessary, in order to load goods of great size or weight onto the truck, to get onto the loading plane with a trolley or a similar loading means, the ribs necessarily have to be moved to the open condition so as not to be an obstacle for the loading maneuvers. Every time these operations have to be carried out, it is therefore necessary to move the whole cover into the open condition. This movement, however, is very inconvenient and irksome for the worker responsible, and causes the loading times to be significantly lengthened.

The movement of the frame, moreover, is obtained either by pushing manually one of the ribs or by activating a pair of different cables, one on either side of the cover, associated with relative pulleys and connected to a manual or mechanical drive means. Manual movement is normally very tiring, while if two different cables are used, among other problems, it may happen that during movement the ribs can get entangled and misaligned due to the lack of correspondence and synchronism in the movement of the two cables.

Another disadvantage of known devices is due to the fact that normally they do not provide raised elements of lateral containment associated with the loading plane. This means that, in the event of oscillation of the loads transported, stresses are caused both on the canvas and also on the bow-shaped elements and on the pantograph means, which can lead to damage that, among other things, compromises the correct mobility of said elements.

Some solutions proposed for the raised elements have the disadvantage that they reduce the space available for the goods inside the truck. In other solutions, the raised elements are fixed along the lateral sides of the loading plane and are an obstacle to the loading maneuvers on the means of transport.

The Applicant has devised and embodied the present invention to overcome these shortcomings of the state of the art and to obtain other advantages.

### SUMMARY OF THE INVENTION

The present invention is set forth and characterized in the main claim, while the dependent claims describe other innovative characteristics of the invention.

The purpose of the invention is to obtain an extendable tunnel-type covering device, that is, able to be selectively opened or closed, which is suitable to facilitate the operations of loading and unloading goods, even of great size, without requiring the cover to be completely opened every time.

In accordance with this purpose, an extendable tunnel-type covering device comprises a plurality of bow-shaped support elements able to slide between a first position, wherein they define a first open condition of the cover, and a second position, wherein they define a second closed condition of the cover, and a canvas associated with the bow-shaped support elements.

According to one characteristic of the invention, at least part of the support elements is able to assume at least a raised position and at least a lowered position, in order to selectively vary the loading height and thus facilitate and encourage possible maneuvers to load materials or goods, while still keeping, for example during transportation, the overall height within the limits imposed by the law.

In a preferential embodiment, thrust means, for example of the elastic type, are associated with each bow-shaped support element and are able to be selectively compressed, and subsequently released, in order to respectively lower and raise the corresponding support element and hence the canvas associated therewith.

According to a variant, the positioning of the elastic means between the compressed position and the released position is obtained when the canvas is tensioned laterally downwards, for example by means of anchoring means able to cooperate with corresponding attachment means, for example fixed on the means of transport. To be more exact, the elastic means, such as springs, leaf springs, foils or suchlike, are compressed when the canvas is tensioned and clamped laterally, and return to the extended condition when the canvas is released, thus thrusting the relative support element upwards.

In a preferential embodiment of the invention, the elastic means comprise springs associated with the substantially vertical segments of the relative support element, so as to allow a vertical movement to lift/lower the support element when the canvas is released. In this embodiment, the support elements comprise two vertical uprights, at least partly tubular and opposite each other, and a bridge element associated at the upper part of the two uprights. The springs are located inside the tubular uprights and are associated to the lower ends of the bridge element.

Thanks to this solution, to insert goods of great size in height it is not always necessary to take the whole cover to the open condition, but it is enough to release the canvas laterally to automatically obtain an at least partial lifting of the cover.

According to another characteristic of the invention, the lateral attachment means of the canvas are configured so as to allow a variable selective positioning, when the canvas is laterally clamped, in a plurality of defined and/or definable positions, each one corresponding to a mating height of the cover during functioning in relation to the loading requirements or the specific regulations in force.

Another purpose of the present invention is to achieve an extendable covering device able to be associated with a means of transport such as a truck, a truck and trailer, a railway car or suchlike, and suitable not to be an obstacle or create impediments, when the cover is open, to the maneuvers to load or unload goods.

In accordance with this purpose, the covering device according to the present invention comprises a plurality of side panels of a removable type, for containment and protection purposes, which are able to be selectively arranged along the sides of the means of transport and are supported by corresponding support elements, also advantageously of the selectively removable type. The function of the side panels, when mounted, is to laterally contain the loads transported which, in this way, even in the event of oscillation, do not burden either the canvas or the support elements.

During loading, the side panels can be removed completely, and thus do not impede the loading operations. Moreover, since they are associated with the sides, the side panels in no way limit the loading volume defined by the plane.

Another purpose of the present invention is to achieve an extendable covering device able to be selectively opened and closed without the risk of the support elements possibly jamming or becoming misaligned.

In accordance with this purpose, the support elements are connected in pairs, in correspondence with the relative vertical segments, by means of at least a pantograph device. Movement means, comprising at least a drive assembly, manual or driven, arranged for example at one end of the cover, are connected by means of a single cable means to all the support elements, in order to move them selectively between the open condition and the closed condition. The cable means is substantially closed in a ring, so as to prevent a possible cross over of the support elements and to ensure a regular and continuous movement thereof.

### BRIEF DESCRIPTION OF THE DRAWINGS

These and other characteristics of the present invention will become apparent from the following description of a preferential form of embodiment, given as a non-restrictive example, with reference to the attached drawings wherein:
- fig. 1 is a side view of a covering device according to the present invention in a first closed condition and associated with the trailer of a truck;
- fig. 2 is a side view of the covering device in fig. 1 in a second open condition;
- fig. 3 is a front view of a support element of the device in fig. 1;
- fig. 4 is a view from A of a detail of fig. 3;
- fig. 5 is a front view of the detail I in fig. 1;
- fig. 6 is a side view of the detail II in fig. 2 in an exploded condition;
- fig. 7 shows the movement assembly of the device in fig. 1;
- fig. 8 is an exploded view of an anchoring and height regulating element of the device in fig. 1;
- fig. 9 is a side view of the element in fig. 8.

### DETAILED DESCRIPTION OF A PREFERENTIAL FORM OF EMBODIMENT OF THE INVENTION

With reference to the attached figures, an extendable covering device 10 for a means of transport for large size goods, such as for example a cabin truck 11, comprises an extendable tunnel-type frame 12, able to slide on a loading plane 14 of the truck 11.

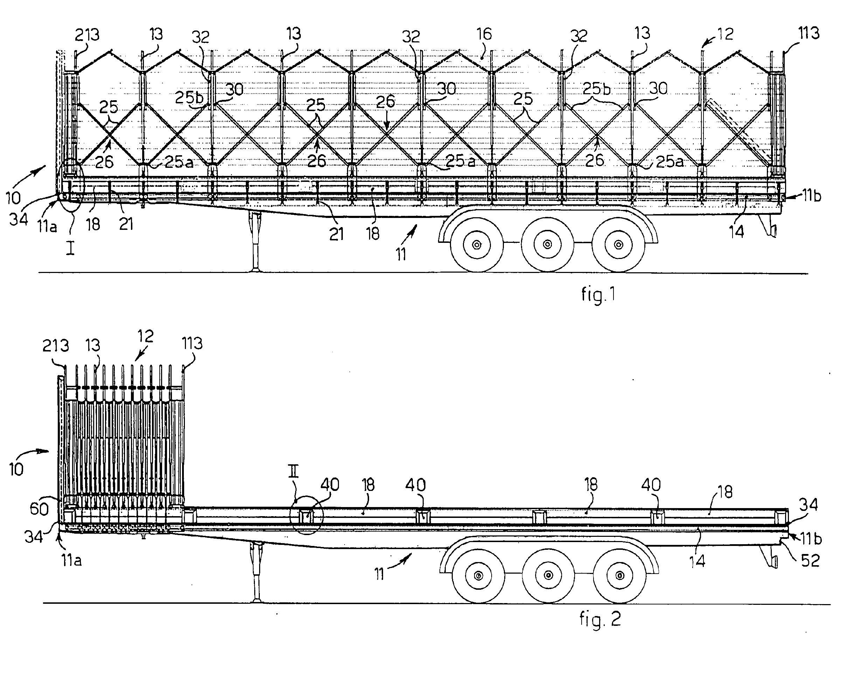

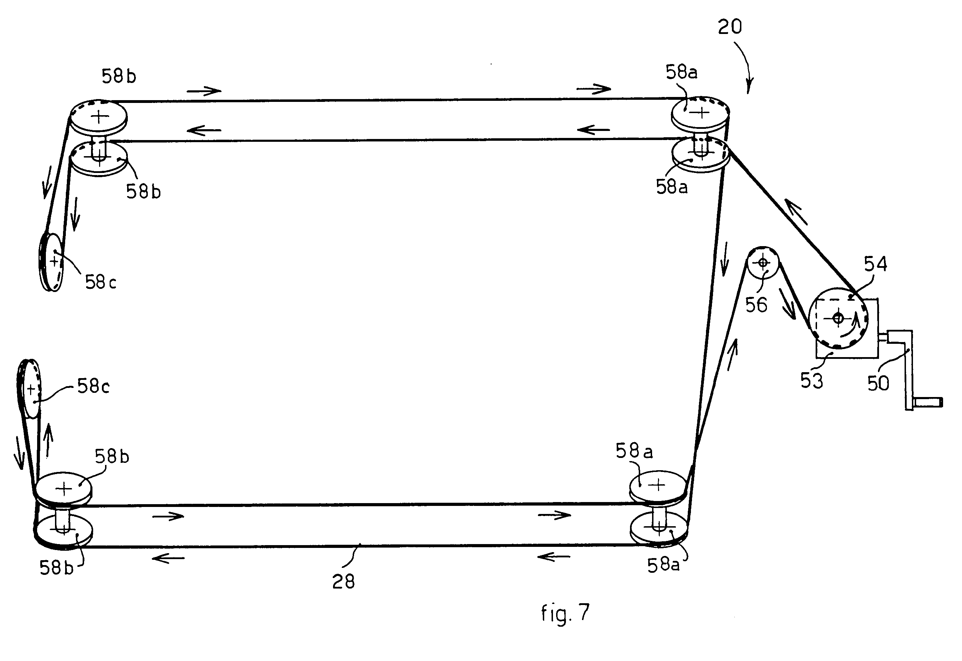

The extendable covering device 10 also comprises a movement assembly 20 (fig. 7), in this case manually driven, connected by means of a cable 28 to the tunnel-type frame 12, to determine the movement thereof between two operating positions, a first open position, wherein the frame 12 is packed towards the front zone of the truck 11 (fig. 2), and a second closed position, wherein the frame 12 is extended along the whole truck 11 (fig. 1).

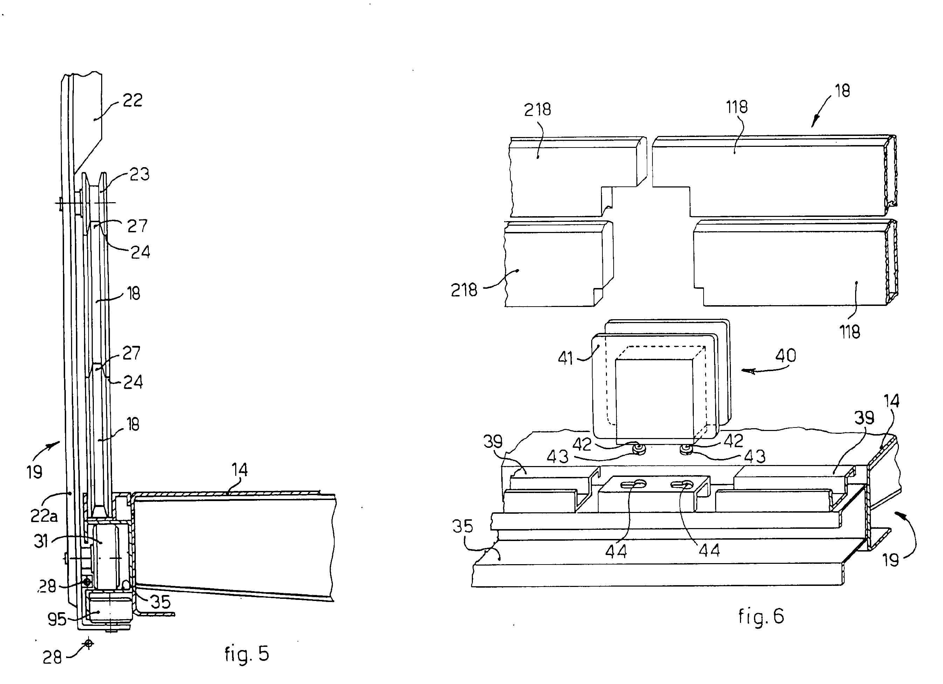

The extendable frame 12 is able to slide above raised protection side panels 18, arranged aligned on both the lateral sides 19 of the truck 11 (figs. 5 and 6).

A covering canvas 16 is attached above the frame 12 to protect the goods, and is provided with lateral attachment elements 21 (figs. 1, 8 and 9) able to be attached on corresponding hooks solid with the lateral sides 19 of the loading plane 14. The attachment elements 21, described in greater detail hereafter, are driven to clamp and tension the canvas 16 laterally and downwards with respect to the truck 11.

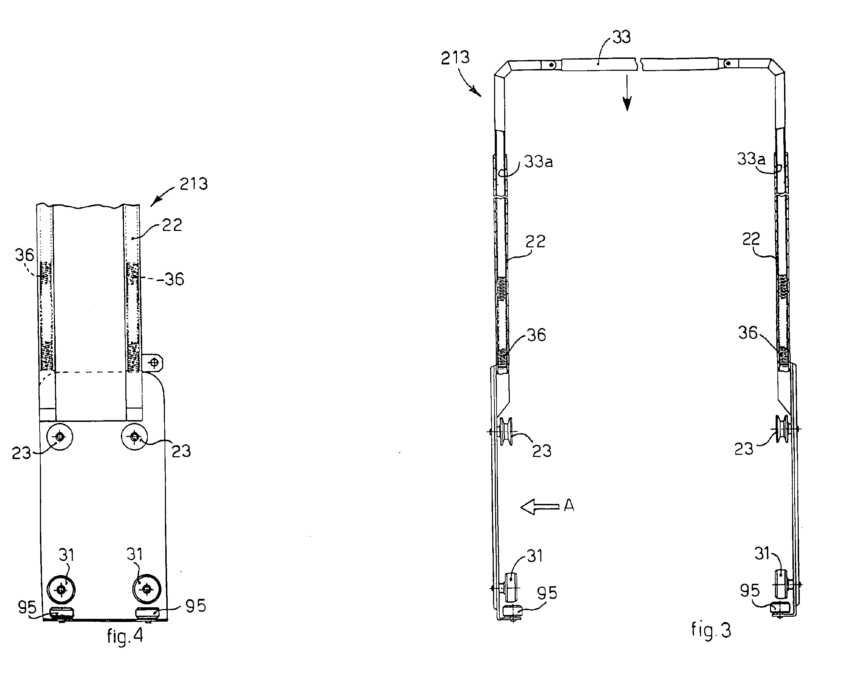

The extendable frame 12 comprises a plurality of support elements, or ribs 13, 113, 213 each one consisting of at least two uprights 22 (fig. 3), able to slide by means of wheels 23 along the upper edges 24 of the protection side panels 18. The numbers 113 and 213 denote the rear and front end ribs respectively, while the number 13 denotes the intermediate ribs.

The uprights 22 are at least partly of the tubular type and open at the top. Each upright 22 is also connected to the corresponding opposite upright by means of a relative transverse bow-shaped profile 33. Each of the two lower ends 33a of the transverse profile 33 is inserted telescopically inside the corresponding upright 22.

Springs 36 are inserted inside each upright 22, to cooperate selectively with the relative lower end 33a of the transverse profile 33, so as to define a first raised position of the corresponding transverse profile 33, wherein the springs 36 are extended in an inactive condition, and a second lowered position of the transverse profile 33, wherein the springs 36 are compressed.

The clamped or released position of the covering canvas 16 determines, in the embodiment shown here, a vertical movement between the raised condition and the lowered condition of the whole frame 12 and the canvas 16, when the attachment elements 21 are attached to the relative hooks of the loading plane 14 and the canvas 16 is tensioned laterally and downwards.

In this case, when the extendable frame 12 and the canvas 16 are in the closed condition, and the canvas is laterally detached, the transverse profiles 33 are thrust upwards by the release of the springs 36, so that the overall height of the cover reaches up to 4.20-4.50 m, thus allowing to momentarily increase the height of the canvas 16 and facilitate the loading even of large size goods, especially in the event that a driven loading means is used, such as a trolley.

On the contrary, when the canvas 16 is attached and tensioned laterally, it exerts a compression force downwards on the springs 36 in order to lower the whole covering device 10 to the height allowed by the law.

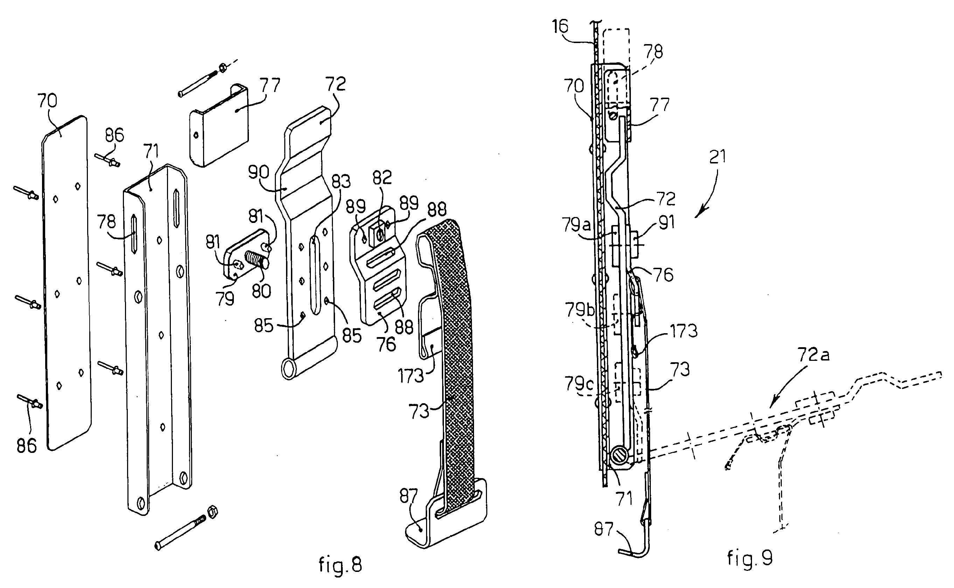

In the preferential embodiment shown in figs. 8 and 9, each attachment element 21 has three different selectable positions in height, in order to modify the overall height of the cover, during the closed functioning condition, in relation for example to specific loading requirements or modifications to the law. This allows quick and precise adaptations which are not burdensome and tiring for the operators.

In this case, each attachment element 21 consists of a C-shaped plate 71 and a clamping counter-plate 70 between which the canvas 16 is attached, in this case by means of screws 86. A tensioning lever 72 is pinned, with a substantially horizontal axis of rotation, to the C-shaped plate 71 and is associated with an anchoring band 73 to anchor the canvas, by means of an intermediate element 76 solid with the latter. The band 73 is solidly associated at the lower part with a hook 87 attached laterally to or below the plane 14.

The band 73 is coupled to the lever 72 by inserting the upper end 173 into one or more eyelets 88 made on the intermediate element 76; the eyelets 88 allow to regulate the initial length of the anchoring band 73 with respect to the fixed point consisting of the hook 87.

In the embodiment shown, the intermediate element 76 is able to be attached to the lever 72, by means of a clamping element 79, in three distinct positions (indicated in fig. 9 by 79a, 79b, 79c), so as to allow the positioning of the band 73 at three variable and pre-defined heights with respect to the plate 71 and counter-plate 70.

In this case, the clamping element 79 has a threaded central screw 80 and a pair of lateral positioning and centering pins 81. The central screw 80 is able to be inserted in a vertical eyelet 83 made in the central zone of the lever 72 and to be screwed into a threaded hole 82, made in the upper part of the intermediate element 76, and clamped with a nut 91; the lateral pins 81 are able to be inserted into corresponding holes 85, 89 made respectively in the lever 72 and in the intermediate element 76, in correspondence with said three different positions.

The attachment element 21 also comprises a third safety plate 77, movable vertically along two vertical eyelets 78 made in the upper part of the wings of the C-shaped plate 71. The upper portion of the lever 72 also has a convex part 90 able to be inserted into the cavity of the C-shaped plate 71.

When the canvas 16 is in the release condition, the lever 72 is in the open position, indicated by a line of dashes 72a in fig. 9, and the band 73 is in the loosened condition. When the canvas 16 is to be clamped and tensioned, the lever 72 is rotated upwards so as to draw downwards the pair of plates 70, 71 and the canvas 16 attached thereto, with respect to the fixed point defined by the hook 87. The lever 72 is rotated until it is arranged in a substantially vertical position inside the wings of the C-shaped plate 71. To ensure a stable positioning, the third plate 77 is raised and then left to descend into the eyelets 78, thus clamping the lever 72 against possible accidental opening.

In relation to the vertical position of the intermediate element 76 and of the relative clamping element 79 with respect to the plates 70, 71, the height and tension of the canvas 16 and of the frame 12 will consequently assume the three different selectable conditions according to requirements and to the initial arrangement.

With reference to the end ribs 113 and 213, which are of the double type, each upright 22 is provided with a pair of upper wheels with a horizontal axis 23, each of which is arranged on an inner side of the relative upright 22 to be able to slide, backwards and forwards, in a corresponding cusp 27, made on the upper edge 24 of the protection side panels 18.

At the lower end 22a of each upright 22, towards the inside of the frame 12, two pairs of other lower wheels are pinned, respectively 31 with a horizontal axis and 95 with a vertical axis, able to slide in a corresponding groove 35 made on each side 19 of the truck 11 (fig. 5). Stop elements 34 are also attached to the front 11a and rear 11b corners of the truck 11 to determine the end-of-travel of both the upper wheels 23 and the lower wheels 31, 95.

The uprights 22 are connected in twos by means of a pair of rods 25, crossed in a pantograph 26 (fig. 1), in a substantially known manner. Each rod 25 has the lower end 25a pinned in the lower zone of each upright 22 and the upper end 25b provided with a sliding element 30 which slides in a mating guide 32 arranged on the side of the upright 22 which faces the corresponding rod 25.

According to the invention, the side panels 18 are completely removable with respect to the loading plane 14 and are able to be inserted into corresponding guides 39 (fig. 6) and clamped inside corresponding supports 40, also arranged in removable manner along the sides 19 of the plane 14, in a position above the groove 35.

In this case, each support 40 comprises a U-shaped metal sheet 41 (fig. 6), into which the front ends of first side panels 118 and the rear ends of second side panels 218, adjacent to the first, are inserted. On the lower part each support 40 has a pair of feet 42, each provided at the lower end with a head 43 able to be inserted like a bayonet into a corresponding key-shaped eyelet 44, made on the sides 19 of the plane 14.

In this way, both the side panels 18 and the supports 40 can be selectively removed with respect to the plane 14, when the cover is in the open condition, to allow easy loading or unloading, even laterally, of large size goods, onto and from the truck 11.

According to another characteristic, the protection side panels 18 can be selectively superimposed and coupled one above the other in modular manner and also to a desired number and height (fig. 5). The lower edge of a first side panel 18 has a profile, in section, complementary to the upper edge of a second side panel below, provided in this case with the afore mentioned cusp 27. Moreover, each side panel 18, being arranged in line and in correspondence with the side 19 of the truck 11, occupies a minimum space and allows to obtain, inside the frame 12, up to 2470-2490 mm of width available to load the goods.

According to another characteristic of the present invention, the frame 12 is connected to the only cable 28 in order to slide with respect to the plane 14 in regular manner, without risk of cross over.

In this case, the movement assembly 20 (fig. 7) comprises a crank 50, arranged in correspondence with the rear part 52 of the truck 11, a motion transmission pulley 54, with a vertical axis, connected by means of a return pulley 53 to the crank 50, a pulley 56 to tension the cable 28, and a plurality of return and diversion pulleys 58. The latter comprise first pairs of horizontal pulleys 58a and second pairs of horizontal pulleys 58b arranged respectively in correspondence with the front 11a and rear 11b corners of the truck 11, and a pair of vertical return pulleys 58c arranged on the front side 60 of the plane 14. In this way the cable 28 is closed in a ring, with respective upper and lower segments; the cable 28 extends along the sides 19 of the plane 14, between the diversion pulleys 58a and 58b and, for two partial, opposite segments of the front wall 60, between the front pulleys 58a and the return pulleys 58c, and cross in the rear zone of the truck 11.

A gripper element (not shown in the drawings) also fixes the cable 28 to the first rear end rib 113, to allow motion to be transmitted to the frame 12, in the direction of the arrows, and to allow the frame 12 to be packed towards the cabin. The front end rib 213, on the contrary, is attached to the loading plane 14. It comes within the field of the invention that the cable 28 can be selectively fixed to the rib 213 to pack the frame 12 and the canvas 16 also towards the back end of the truck 11. It also comes within the field of the invention that the movement of the cable 28, instead of with the crank 50, is imparted by means of a hydraulic or electric motor, or any other suitable actuator.

In the embodiment shown, by driving the crank 50 in the direction indicated in fig. 7, the cable 28, cooperating with the pulleys 54 and 56, allows to move the frame 12 in a single direction, towards the right in the first open condition, and towards the left in the second closed condition.

It is clear, however, that modifications and/or additions of parts can be made to the covering device 10 as described heretofore, without departing from the field and scope of the present invention.

It is also clear that, although the present invention has been described with reference to specific examples, a person of skill in the art shall certainly be able to achieve many other equivalent forms of tunnel-type covering device, all of which shall come within the field and scope of the present invention.

## Claims

1. Extendable tunnel-type covering device, comprising a frame (12) consisting of a plurality of bow-shaped support elements (13, 113, 213) able to slide between a first position, wherein they define a first open condition of the covering device, and a second position, wherein they define a second closed condition of the covering device, and a canvas (16) associated with said bow-shaped support elements (13, 113, 213), **characterized in that** at least part of said bow-shaped support elements (13, 113, 213) is able to alternately assume a first raised position and a second lowered position in order to temporarily vary the height of the space defined by said part of said bow-shaped support elements (13, 113, 213).

2. Covering device as in claim 1, wherein said canvas (16) is able to be tensioned laterally in said closed condition, **characterized in that** thrust means (36) are associated with said part of said support elements (13, 113, 213), able to be selectively compressed, when said canvas (16) is tensioned laterally and downwards, and returned to an inactive condition, when said canvas (16) is released, in order to take said support elements (13, 113, 213) respectively to said lowered position and to said raised position.

3. Covering device as in claim 2, **characterized in that** said thrust means (36) are of the elastic type.

4. Covering device as in any claim hereinbefore, **characterized in that** said support elements (12) comprise two vertical uprights (22), at least partly tubular, opposite each other, and a bridge element (33) associated at the upper part of said vertical uprights (22).

5. Covering device as in claims 3 and 4, **characterized in that** said elastic-type means comprise at least two springs (36) each of which is able to be associated with one of the vertical uprights (22) of the relative support element (13, 113, 213).

6. Covering device as in claim 5, **characterized in that** each of said springs (36) is arranged inside the relative vertical upright (22) and associated with the lower end (33a) of said bridge element (33).

7. Covering device as in claim 6, **characterized in that** said lower end (33a) of said bridge element (33) is able to be inserted telescopically inside the upper end (22b) of the corresponding upright (22), and that said spring (36) is inserted inside said upright (22) to cooperate with said lower end (33a) of said bridge element (33) and to determine respectively said raised position and said lowered position of the relative support element (13, 113, 213).

8. Covering device as in claim 2, comprising attachment elements (21) able to clamp and tension laterally the canvas (16) in the closed condition, **characterized in that** said attachment elements (21) are able to assume at least two different positions in order to vary in correlated manner the height of the frame (12) and of the canvas (16) in the closed functioning condition.

9. Covering device as in any claim hereinbefore, able to be associated with a means of transport (11) such as a truck, a truck and trailer and suchlike, **characterized in that** it comprises raised side panels (18) for containment and protection purposes, removable with respect to a loading plane (14) of said means of transport (11).

10. Covering device as in claim 9, **characterized in that** said removable side panels (18) are able to be selectively arranged in line along the sides (19) of said means of transport (11).

11. Covering device as in claim 9 or 10, **characterized in that** it comprises support means (40) to support said side panels (18) able to be arranged longitudinally on both the sides (19) of said loading plane (14), said support means (40) comprising a U-shaped metal sheet into which the ends of at least two of said adjacent side panels (118, 218) are inserted.

12. Covering device as in claim 11, **characterized in that** said support means (40) comprise at the lower part at least foot-type means (42) provided at the lower end with head means (43) able to be inserted into mating eyelets (44) made on the bottom of said plane (14) to be selectively attached to said loading plane (14).

13. Covering device as in any claim from 9 to 12 inclusive, **characterized in that** said support elements (13, 113, 213) are able to slide along the upper edge of said raised side panels (18) by means of corresponding rolling means (23).

14. Covering device as in any claim hereinbefore, **characterized in that** said support elements (13, 113, 213) are connected in twos, in correspondence with the relative vertical uprights (22), by means of at least a pantograph device (26) and that movement means are connected to at least one of said support elements (13, 113, 213) by means of cable means (28) in order to selectively move said support elements (13, 113, 213) between said open condition and said closed condition.

15. Covering device as in claim 14, wherein said movement means comprise a drive means (50), and rotary drawing elements (54), tensioning elements (56), return elements (58c) and diversion elements (58a, 58b) able to cooperate with said cable means (28), **characterized in that** it comprises a single cable means (28) closed substantially in a ring which extends along the sides (19) of said plane (14) and for two opposite partial segments of the side opposite the side where said drive means (50) is arranged, and crosses in correspondence with the side where said drive means (50) is arranged.

16. Covering device as in claim 15, **characterized in that** said cable means (28) is associated at least with two pairs of rotary return elements (58c) in correspondence with the ends of said opposite segments, with two rotary diversion elements (58a, 58b) in correspondence with each of the front (11a) and rear (11b) corners of said truck (11), a rotary tensioning element (56) and a rotary drawing element (54) being able to be arranged in proximity with said drive means (50).

17. Covering device as in claim 16, **characterized in that** said drive means comprises a crank (50), connected to said rotary drawing element by means of a return device (53).

18. Covering device as in claim 16, **characterized in that** said drive means comprises a motor or hydraulic or electric actuator, or of other suitable type.
